# EUROPEAN PATENT SPECIFICATION

(11) **EP 0 410 946 B1**
(45) Date of publication and mention of the grant of the patent: **04.05.1994**
(21) Application number: 90830344.9
(22) Date of filing: 24.07.1990
(51) Int. Cl.: C02F 1/72, C02F 1/46

(54) **Decomposition of detrimental substances**
Zersetzung von Schadstoffen
Décomposition de substances nuisibles

(30) Priority: 24.07.1989 JP 191025/89; 09.08.1989 JP 206526/89; 24.11.1989 JP 304972/89
(43) Date of publication of application: 30.01.1991
(73) Proprietor: TANAKA KIKINZOKU KOGYO K.K., Chuo-ku Tokyo 103 (JP); Furuya, Nagakazu, Kofu-shi Yamanashi (JP)
(72) Inventor: Furuya, Nagakazu, Kofu-shi, Yamanashi (JP)
(74) Representative: Pellegri, Alberto

(56) References cited:
- EP-A- 0 241 432
- GB-A- 1 074 734
- PATENT ABSTRACTS OF JAPAN, vol. 9, no. 295 (E-360)[2018], 21st November 1985; & JP-A-60 136 175 (TOSHIBA K.K.) 19-07-1985
- PATENT ABSTRACTS OF JAPAN; vol. 9, no. 178 (E-330)[1901], 23rd July 1985; & JP-A-60 50 863 (TOSHIBA K.K.) 20-03-1985

## Description

The present invention relates to a method for removing organic compounds in an aqueous solution, and more particularly to a method for removing organic compounds such as hydrazine, carbonyl compounds, carboxylic acids and alcohols included in an aqueous solution by oxidation decomposition.

Conventionally, a precious metal such as platinum, palladium or the like is used as an oxidation catalyst for decomposition of a harmful gas such as carbon monoxide, formalin or formaldehyde or the like in a gas including oxygen. However, such an oxidation catalyst exhibits oxidation ability at a high temperature of approximately 400 °C, which restricts its utilization and application range or fields.

On the other hand, a removal of an organic compound included in an aqueous solution is carried out by reacting with an oxidant added in the solution or by oxidized by using electrolysis.

In the former method, when an oxidant such as a permanganate, hypochlorous acid or hydrogen peroxide is added in an aqueous solution including an organic compound, for example, a reduction of a manganate, chlorine ion or water is taken place by a chemical reaction, and a reduced compound is still existent in the solution or the amount of the solution is increased. When nitric acid as an oxidant is added for decomposing the organic compound in the solution, an NOx gas is caused, and it is difficult to control the reaction. Further, in order to carry out an oxidation decomposition of an aqueous solution including more than several thousand ppm of at least one of hydrazine, carbonyl compounds, carboxylic acids and alcohols to achieve approximately 20 ppm of the same, extremely large apparatus, chemicals and labor are required.

In the latter electrolysis method, anode and cathode chambers are separated by an ion exchange membrane to invite a complicated structure of an apparatus. When the anode and cathode chambers are not separated by the ion exchange membrane, for instance, once oxidized ion at the anode is reduced at the cathode to return to the beginning.

In another method by directly blowing an oxidizing gas into an aqueous solution including an organic compound, since a reaction is effected between the gas and liquid, a reaction efficiency is not sufficient, and this method is not economical.

Further, in a conventional electrolytic oxidation method for decomposing organic compounds which are decomposable in anode reaction in an aqueous solution, insoluble electrodes are used. Typical insoluble electrodes are a titanium anode metal-plated with platinum and a platinum cathode.

However, the decomposable compounds in the anode reaction can be oxidized and decomposed at the anode, and a reduction is taken place at the cathode to produce hydrogen.

The hydrogen produced at the cathode is oxidized at the anode to reduce the current efficiency, and mixing of the hydrogen with oxygen produces detonating gas, which is dangerous. In an electrolytic solution including ions to be reduced at a hydrogen producing potential, anode and cathode chambers must be separated from each other by a diaphragm.

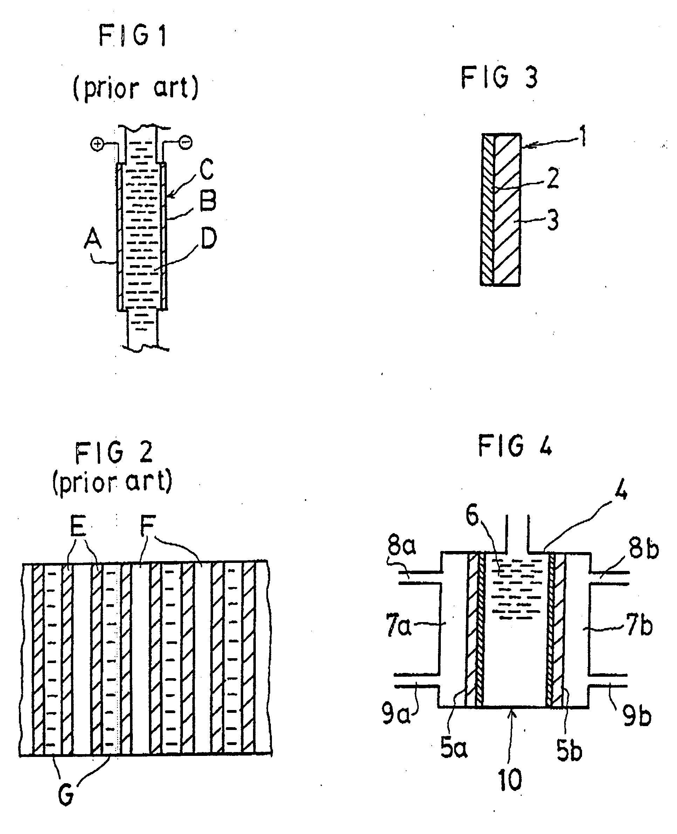

In Fig. 1, there is shown a conventional electrolysis apparatus for carrying out an electrolytic oxidation of compounds, which includes a platinum plate cathode A and an anode B metal-plated with platinum, the two electrodes constituting opposite side walls of an electrolytic vessel C containing an electrolytic solution D therein.

A conventional gas diffusion electrode which may be employed for the decomposition of detrimental substances includes a gas diffusion layer having a sheet or film form and including hydrophobic carbon black and polytetrafluoroethylene (PTFE), and a reaction layer having a sheet or film form and including hydrophilic carbon black, the hydrophobic carbon black and the PTFE, and the gas diffusion layer and the reaction layer are joined together.

In a conventional apparatus, two sheets of gas diffusion electrodes are arranged in opposite sides of an electrolytic chamber. However, when, by supplying a gas such as hydrogen (H₂), oxygen (O₂) or chlorine (Cl₂) to the gas diffusion electrodes to form local cells thereon, oxidation or reduction of ions in an electrolytic solution, decomposition of reductive compounds such as formalin and hydrazine, or production of chemical compounds is carried out, the reaction area of the gas diffusion electrodes is too small.

In order to increase the reaction area of the gas diffusion electrodes, as shown in Fig. 2, a plurality of sheets of gas diffusion electrodes E are arranged in parallel, and gas supply gaps F and liquid supply gaps G are alternately arranged between adjacent two gas diffusion electrodes E. In this case, gas and liquid are supplied or circulated in the same direction, opposite directions or crossing directions.

However, In this case, sufficient good efficiency of the gas diffusion electrodes can not be yet obtained. In order to further improve the efficiency, the distance between the electrodes is narrowed or the thickness of the electrodes is reduced. However, when the apparatus is enlarged, it becomes difficult to assemble and handle the electrodes due to the strength reduction thereof. Further, extreme cost increase is invited by enlarging the apparatus.

### SUMMARY OF THE INVENTION

Accordingly, it is an object of the present invention to provide a method for removing an organic compound included in an aqueous solution, free from the aforementioned defects and disadvantages of the prior art, which is capable of carrying out with high efficiency in a simple manner without admixing an impurity into the solution, and performing by oxidation decomposition using oxygen existent in the air.

In accordance with the present invention, there is provided a method for removing a chemical compound in an solution according to the subject-matter of claim 1.

### BRIEF DESCRIPTION OF THE DRAWING

The above and other objects, features and advantages of the present invention will more fully appear from the following description of the preferred embodiment with reference to the accompanying drawings, in which:
Fig. 1 is a longitudinal cross section of a conventional electrolysis apparatus;
Fig. 2 is a cross sectional view of a conventional gas diffusion electrode aligned in parallel;
Fig. 3 is a cross sectional view of a gas diffusion film to be used in a method for removing organic compounds in solution according to a first aspect of the present invention;
Fig. 4 is a cross sectional view of an organic compound decomposition apparatus for use in a method according to the first aspect of the invention;

### DESCRIPTION OF THE PREFERRED EMBODIMENTS

The present invention will be described in detail in connection with its preferred embodiments with reference to the accompanying drawings.

A method for removing organic compounds in solution according to the present invention will be described in detail in connection with its preferred embodiments with reference to the accompanying drawings.

In Fig. 3, there is shown a gas diffusion film 1 to be used in a method for removing organic compounds such as hydrazine, carbonyl compounds, carboxylic acids and alcohols included in an aqueous solution by oxidation decomposition of this invention.

The gas diffusion film 1 includes a reaction layer 2 and a gas diffusion layer 3 joined together with the reaction layer 2. The reaction layer 2 is prepared as follows: That is, hydrophobic and hydrophilic carbon black fine particles having an average particle size of approximately 420Å, fluororesin such as polytetrafluoroethylene (PTFE) fine particles having an average particle size of approximately 0.3µ and solvent naphtha as a solvent are mixed at a mixture ratio of 7:4:4:20, and a suitable amount of a catalyst is also admixed with the mixture. The obtained mixture is processed under pressure into a film form and is dried at a temperature of 280 °C for removing the solvent to obtain the reaction layer 2 having a thickness of approximately 0.1 to 0.2 mm.

The gas diffusion layer 3 is prepared as follows: That is, the hydrophobic carbon black fine particles having an average particle size of approximately 420Å, the PTFE fine particles having an average particle size of approximately 0.3µ and the solvent naphtha as a solvent are mixed at a mixture ratio of 6.5:3.5:18. The obtained mixture is processed under pressure into a film form and is dried at a temperature of 280 °C for removing the solvent to obtain the diffusion layer 3 having a thickness of approximately 0.4 to 0.6 mm. The reaction layer 2 includes hydrophilic pores carrying the catalyst thereon and hydrophobic pores therein, and the diffusion layer 3 includes only hydrophobic pores therein.

In the gas diffusion film 1, since the hydrophilic carbon black fine particles carrying the catalyst, the hydrophobic carbon black fine particles and the PTFE fine particles are finely mixed in the reaction layer 2, an aqueous solution including an organic compound is permeable to the hydrophilic carbon black fine particles portions, and an oxidizing reaction gas is permeable to the hydrophobic portions composed of the hydrophobic carbon black fine particles and the PTFE fine particles. Hence, the catalyst gets wet by the solution including the organic compound permeating to the catalyst, and the oxidizing reaction gas can be in existence near the catalyst. A local cell reaction is constituted at the catalyst, and an electrode surface area participating in the local cell reaction becomes at least 500 times as large as its appearance. That is, the oxidation decomposition speed of the organic compound can be extremely increased.

The gas diffusion layer 3 includes pores having a pore size of at most 0.1 µm, and the pore rate is more than 60%. The oxidizing reaction gas can pass through the pores, but the solution including the organic compound can not pass through the pores.

For instance, even when a hydraulic pressure of 20 kg/cm² is applied to the reaction layer side of the gas diffusion film 1, no water comes out of the gas diffusion layer side, but the reaction gas can be readily supplied from the gas diffusion layer side to the reaction layer side.

In Fig. 4, there is shown an organic compound oxidation decomposition apparatus 10 for use in a method for removing organic compounds included in a solution according to the present invention. A reaction vessel 4 having a dimension of 120 mm in length x 120 mm in width x 120 mm in depth includes left and right gas diffusion films 5a and 5b having a dimension of 120 mm x 120mm x 0.6 mm in thickness at a certain distance away from each other, each gas diffusion film including a reaction layer having a thickness of 0.1 mm and a diffusion layer having a thickness of 0.5 mm. The reaction layers of the left and right gas diffusion films 5a and 5b define left and right side walls of a central liquid chamber 6 having a width of 40 mm, and the diffusion layers of the same define left and right air chambers 7a and 7b. The left and right air chambers 7a and 7b are formed with upper air inlets 8a and 8b and lower air outlets 9a and 9b, respectively.

As to the catalyst carried on the reaction layer 2 of the gas diffusion film 1, at least one of precious metals such as platinum, palladium and iridium can be used, and an alloy prepared by mixing at least one of ruthenium and tin with at least one of precious metals such as platinum, palladium and iridium can also be used. The catalyst comprises fine particles.

As regards the oxidizing reaction gas, oxygen gas or a gas including oxygen such as the air can be used. The air is preferably used in the light of economy.

According to this aspect of the present invention, organic compounds such as hydrazine, carbonyl compounds, carboxylic acids and alcohols or compounds including 3 carbon atoms and one oxygen atom such as methyl alcohol, ethyl alcohol, propyl alcohol, isopropyl alcohol, ethylene glycol, formaldehyde, acetaldehyde, acetone, formic acid oxalic acid and acetic acid are electrochemically oxidized.

In this aspect of the present invention, by using a platinum electrode, the organic compounds such as formaldehyde, formic acid and alcohols are electrochemically oxidized at less than 0.5V (standard hydrogen electrode potential which is hereinafter used as a voltage).

Meanwhile, oxygen can be sufficiently reduced at 0.8V by using a platinum electrode.

When such an organic compound and oxygen are allowed to be coexistent on the platinum electrode, a local cell is formed thereon, and an oxidation decomposition of formaldehyde, formic acid and alcohols can be carried out by the oxygen.

In order to readily form the local cells on the electrode, the solution including the organic compound is supplied to the reaction layer side of the gas diffusion film 1, and the oxygen gas is supplied to the diffusion layer side of the gas diffusion film 1. Therefore, in this case, the local cells are effectively formed in the reaction layer 2 of the gas diffusion film 1, and the organic compounds contained in the solution can be readily oxidized and decomposed, thereby removing the organic compounds from the solution.

Further, since the gas diffusion film is a thin film, an apparatus for removing organic compounds can be designed to a small size, and in order to increase a treating amount, a plurality of apparatuses may be aligned in series or in parallel.

Further, the gas diffusion film can be formed in a cylindrical form. A cylindrical gas diffusion film is mounted in a container, and the solution including the organic compounds and the oxidizing reaction gas are supplied to the container in a mixed phase flow state.

In order to Increase the oxidizing area, a net composed of a porous metal carrying platinum, ruthenium or the like may be put between the gas diffusion films.

Examples of the present invention will now be described in detail, and the present invention is not restricted to the Examples.

### Example 1 :

The oxidation was carried out by using the organic compound oxidation decomposition apparatus shown in Fig. 4, in which a platinum catalyst was carried on the reaction layers of the gas diffusion films 5a and 5b in an amount of 1.0 mg/cm². An aqueous solution having a pH 11 and including 0.5% by weight of formic acid was contained in the liquid chamber 6, and the air was supplied in an amount of 20 ml/min. into the air chambers 7a and 7b. After the reaction for 24 hours, the concentration of the formic acid in the solution was less than 6 ppm.

### Example 2 :

The oxidation was carried out in the same manner as Example 1, except that a sulfuric acid solution having a pH 3 and including 0.3% by weight of methanol was contained in the liquid chamber 6, and the oxygen gas was supplied into the air chambers 7a and 7b. After the reaction for 15 hours, the concentration of the methanol in the solution became less than 5 ppm.

### Example 3 :

The oxidation was carried out in the same manner as Example 1, except that a sulfuric acid solution having a pH 3 and including 0.3% by weight of formaldehyde was contained in the liquid chamber 6, and the air was supplied into the air chambers 7a and 7b. After the reaction for 24 hours, the concentration of the formic acid in the solution was less than 10 ppm.

### Example 4 :

The oxidation was carried out in the same manner as Example 1, except that a platinum-ruthenium alloy catalyst was carried on the reaction layers of the gas diffusion films in an amount of 2 mg/cm² and that a sulfuric acid solution having a pH 3 and including 0.3% by weight of methanol was contained in the liquid chamber 6, and the oxygen gas was supplied into the air chambers 7a and 7b. After the reaction for 10 hours, the concentration of the methanol in the solution was less than 5 ppm.

### Example 5 :

The oxidation was carried out in the same manner as Example 1, except that a platinum-ruthenium alloy catalyst was carried on the reaction layers of the gas diffusion films in an amount of 2 mg/cm² and that a sulfuric acid solution having a pH 3 and including 0.3% by weight of formaldehyde was contained in the liquid chamber 6, and the oxygen gas was supplied into the air chambers 7a and 7b. After the reaction for 15 hours, the concentration of the formaldehyde in the solution was less than 15 ppm.

### Example 6 :

The oxidation was carried out in the same manner as Example 1, except that a platinum-ruthenium alloy catalyst was carried on the reaction layers of the gas diffusion films in an amount of 2 mg/cm² and that a sulfuric acid solution having a pH 3 and including 0.2% by weight of ethanol was contained in the liquid chamber 6, and the oxygen gas was supplied into the air chambers 7a and 7b. After the reaction for 20 hours, the concentration of the ethanol in the solution was less than 5 ppm.

### Example 7 :

The oxidation was carried out in the same manner as Example 1, except that a platinum-ruthenium alloy catalyst was carried on the reaction layers of the gas diffusion films in an amount of 2 mg/cm² and that a sulfuric acid solution having a pH 3 and including 0.2% by weight of acetaldehyde was contained in the liquid chamber 6, and the oxygen gas was supplied into the air chambers 7a and 7b. After the reaction for 15 hours, the concentration of the acetaldehyde in the solution was less than 5 ppm.

### Example 8 :

The oxidation was carried out in the same manner as Example 1, except that a platinum-ruthenium alloy catalyst was carried on the reaction layers of the gas diffusion films in an amount of 2 mg/cm² and that a sulfuric acid solution having a pH 3 and including 0.1% by weight of isopropyl alcohol was contained in the liquid chamber 6, and the oxygen gas was supplied into the air chambers 7a and 7b. After the reaction for 20 hours, the concentration of the isopropyl alcohol in the solution was less than 8 ppm.

### Example 9 :

The oxidation was carried out in the same manner as Example 1, except that a platinum-ruthenium alloy catalyst was carried on the reaction layers of the gas diffusion films in an amount of 2 mg/cm² and that a sulfuric acid solution having a pH 3 and including 0.1% by weight of acetone was contained in the liquid chamber 6, and the oxygen gas was supplied into the air chambers 7a and 7b. After the reaction for 15 hours, the concentration of the acetone in the solution was less than 5 ppm.

### Example 10 :

The oxidation was carried out in the same manner as Example 1, except that a platinum-ruthenium alloy catalyst was carried on the reaction layers of the gas diffusion films in an amount of 2 mg/cm² and that a sulfuric acid solution having a pH 3 and including 0.1% by weight of ethylene glycol was contained in the liquid chamber 6, and the oxygen gas was supplied into the air chambers 7a and 7b. After the reaction for 20 hours, the concentration of the ethylene glycol in the solution was less than 5 ppm.

### Example 11 :

The oxidation was carried out in the same manner as Example 1, except that a platinum-ruthenium alloy catalyst was carried on the reaction layers of the gas diffusion films in an amount of 2 mg/cm² and that a sulfuric acid solution having a pH 3 and including 0.1% by weight of oxalic acid was contained in the liquid chamber 6, and the oxygen gas was supplied into the air chambers 7a and 7b. After the reaction for 20 hours, the concentration of the oxalic acid in the solution was less than 5 ppm.

### Example 12 :

The oxidation was carried out in the same manner as Example 1, except that a platinum-ruthenium alloy catalyst was carried on the reaction layers of the gas diffusion films in an amount of 2 mg/cm² and that a sulfuric acid solution having a pH 3 and including 0.1% by weight of hydrazine was contained in the liquid chamber 6, and the oxygen gas was supplied into the air chambers 7a and 7b. After the reaction for 18 hours, the concentration of the hydrazine in the solution was less than 5 ppm.

### Example 13 :

The oxidation was carried out in the same manner as Example 1, except that a platinum-ruthenium alloy catalyst was carried on the reaction layers of the gas diffusion films in an amount of 2 mg/cm² and that a sulfuric acid solution having a pH 3 and including 0.1% by weight of acetic acid was contained in the liquid chamber 6, and the oxygen gas was supplied into the air chambers 7a and 7b. After the reaction for 20 hours, the concentration of the acetic acid in the solution was less than 5 ppm.

### Example 14 :

The oxidation was carried out in the same manner as Example 1, except that the gas diffusion film is formed in a Raschig ring form and is arranged within a cylindrical vessel having a dimension of 10 cm of internal diameter x 30 cm in length, and that 1.5 liter of a sulfuric acid solution including 0.3% by weight of formaldehyde is contained in the vessel, and the air is supplied into the vessel from its bottom in an amount of 30 ml/min. After the reaction for 5 hours, the concentration of the formaldehyde In the solution was less than 7 ppm.

### Example 15 :

The oxidation was carried out in the same manner as Example 1, except that a net composed of a porous metal such as titanium carrying platinum and ruthenium thereon is put between the two gas diffusion films in order to increase the oxidation area and that a sulfuric acid solution having a pH 3 and including 0.1% by weight of formaldehyde, 0.1% by weight of methanol and 0.1% by weight of formic acid was contained in the liquid chamber 6, and the oxygen gas was supplied into the air chambers 7a and 7b. After the reaction for 15 hours, the concentrations of the formaldehyde, methanol and formic acid in the solution were less than 5 ppm, respectively.

## Claims

1. A method for oxidizing a chemical compound present in a solution with oxygen on a catalyst, characterized by the steps of:
contacting the solution containing said chemical compound to be eliminated therefrom with a reaction layer side of a laminated structure composed of a porous, catalytic reaction layer comprising hydrophilic carbon particles carrying a catalyst thereon, hydrophobic carbon particles and a fluororesin binder, and of a porous, gas diffusion layer, having only hydrophobic pores, comprising hydrophobic carbon particles and a fluororesin binder
while supplying gaseous oxygen in contact with the gas diffusion layer side of the laminated structure;
said porous, gas diffusion layer being permeable to gaseous oxygen and impermeable to said solution.

2. The method of claim 1, wherein said laminated structure is polarized as a cathode and an electrode polarized as an anode is maintained in contact with the said solution.

3. The method of claim 1, wherein the catalyst comprises fine particles of at least one of precious metal of platinum, palladium and iridium and alloys composed of at least one of ruthenium and tin and at least one of the precious metals.

4. The method of claim 1, wherein the chemical compound is one of hydrazine, carbonyl compounds, carboxylic acids and alcohols.

5. The method of claim 4, wherein the chemical compound is one of hydrazine, methyl alcohol, ethyl alcohol, propyl alcohol, isopropyl alcohol, ethylene glycol, formaldehyde, acetaldehyde, acetone, formic acid oxalic acid and acetic acid.

6. The method of claim 1, wherein the gas including oxygen is one of oxygen gas and air.

## Patentansprüche

1. Verfahren zum Oxydieren einer in Lösung vorliegenden chemischen Verbindung mit Sauerstoff an einem Katalysator, gekennzeichnet durch die folgenden Verfahrensschritte:
die die genannten daraus zu entfernende chemischen Verbindung enthaltende Lösung wird mit einer Reaktionschichtseite eines Verbundaufbaus in Berührung gebracht, der aus einer porösen Schicht zur katalytischen Umsetzung, welche Schicht hydrophile katalisatortragende Kohlenteilchen, hydrophobe Kohlenteilchen und ein Fluorharzbindemittel enthält, und aus einer porösen Gasdiffusionsschicht, die nur hydrophoben Poren aufweist und hydrophoben Kohlenteilchen und ein Fluorharzbindemittel enthält, besteht,
wobei Sauerstoffgas in Berührung mit der Gasdiffusionsschichtseite des Verbundaufbaus zugeführt wird;
wobei die genannte poröse Gasdiffusionsschicht für Sauerstoffgas durchlässig und für die genannte Lösung undurchlässig ist.

2. Verfahren nach Ansprüch 1, wobei der genannte Verbundaufbau katodhisch polarisiert ist und eine anodisch polarisierte Elektrode mit der genannten Lösung in Berührung gehalten wird.

3. Verfahren nach Anspruch 1, wobei der Katalysator feine Teilchen wenigstens eines der Edelmetallen Platin, Palladium und Iridium und Legierungen aus mindestens einem zwischen Ruthenium und Zinn und mindestens einem der Edelmetallen enthält.

4. Verfahren nach Anspruch 1, wobei die chemische Verbindung aus der Gruppe Hydrazin, Carbonylverbindungen, Carbonsäuren und Alkoholen gewählt ist.

5. Verfahren nach Anspruch 4, wobei die chemische Verbindung aus Hydrazin, Methylalkohol, Ethylalkohol, Propylalkohol, Isopropylalkohol, Ethylenglykol, Formaldeyd, Acetaldehyd, Aceton, Ameisensäure, Oxalsäure und Essigsäure gewählt ist.

6. Verfahren nach Anspruch 1, wobei das sauerstoffenthaltende Gas aus Sauerstoffgas und Luft gewählt wird.

## Revendications

1. Méthode pour l'oxydation d'un composé chimique présent en solution avec oxygen sur un catalyseur, caractérisé par les stades de :
mise en contact de la solution contenant le dit composé chimique qui doit être éliminé de la même avec le côté d'une couche de réaction d'une structure stratifiée comprenant une couche poreuse de réaction catalytique comprenant des particules de carbone hydrophiliques sur lesquelles est supporté un catalyseur, des particules de carbone hydrophobique et un liant fluororésine, et une couche poreuse de diffusion de gaz ayant uniquement des pores hydrophobiques et comprenant des particules de carbone hydrophobiques et un liant fluororésine,
en fournissant oxygen en contact avec le côté de la couche de diffusion de gaz de la structure stratifiée;
ladite couche poreuse de diffusion de gaz étant perméable à l'oxygen gazeux et imperméable à la dite solution.

2. Méthode selon la revendication 1, dans laquelle ladite structure stratifiée est polarisée à la façon d'une cathode et une électrode polarisée à la façon d'une anode est maintenue en contact avec ladite solution.

3. Méthode selon la revendication 1, dans laquelle le cataliseur comprend fines particules et au moins un entre les métaux précieux platine, palladium et iridium et alliages composés d'au moins ruthenium et étain et d'au moins un des métaux précieux.

4. Méthode selon la revendication 1, dans laquelle le composé chimique est un composé choisi entre hydrazine, composés carbonyles, acides carboxiliques et alcools.

5. Méthode selon la revendication 4, dans laquelle le composé chimique est un composé choisi entre hydrazine, alcool méthylique, alcool éthylique, alcool propylique, alcool isopropylique, glycol éthylénique, formaldéhyde, acetaldéhyde, acétone, acide formique, acide oxalique et acide acétique.

6. Méthode selon la revendication 1, dans laquelle le gaz comprenant oxygène est choisi entre le gaz oxygène et l'air.
